# EUROPEAN PATENT SPECIFICATION

(11) **EP 1 416 604 B1**
(45) Date of publication and mention of the grant of the patent: **29.06.2016**
(21) Application number: 03024222.6
(22) Date of filing: 22.10.2003
(51) Int. Cl.: H02J 3/38, H02M 5/458, F03D 9/00

(54) **Electric circuit for a driven generator with segmented stator**
Elektrische Schaltung für einen angetriebenen Generator mit segmentiertem Stator
Circuit électrique pour générateur entraîné avec "stator segmenté"

(30) Priority: 31.10.2002 DK 200201682
(43) Date of publication of application: 06.05.2004
(73) Proprietor: Siemens Aktiengesellschaft, 80333 München (DE)
(72) Inventor: Stiesdal, Henrik, 5000 Odense C (DK)

(56) References cited:
- WO-A-97/45908
- WO-A1-01/25630
- WO-A1-93/11604
- DE-A1- 4 232 356
- CENGELCI E ET AL: "Modular PM generator/converter topologies, suitable for utility interface of wind/micro turbine and flywheel type electromechanical energy conversion systems" INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 4, 8 October 2000 (2000-10-08), pages 2269-2276, XP010522573 ISBN: 978-0-7803-6401-1
- SACCOMANDO G ET AL: "Transient operation of grid-connected voltage source converter under unbalanced voltage conditions", CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001; [CONFERENCE RECORD OF THE IEEE INDUSTRY APPLICATIONS CONFERENCE. IAS ANNUAL MEETING], NEW YORK, NY : IEEE, US, vol. 4, 30 September 2001 (2001-09-30), pages 2419-2424, XP010562021, DOI: 10.1109/IAS.2001.955960 ISBN: 978-0-7803-7114-9

## Description

The present invention concerns an electric circuit for a power plant, preferably a windmill, and a method for converting wind energy into electric power.

WO 00/60719 discloses a generator, primarily for use in windmills, where the generator is of a type that is coupled directly to the main shaft of the windmill, where the stator of the generator is made up of a number of stator modules that are configured as independent modules mechanically as well as electrically. Configuring or designing a stator as modules may provide faster and easier repair in case of failure, but also great reliability, as a generator may in principle continue operation even if a single stator section fails.

In all generator types operating with separate windings, a difference in output current and voltage will appear at different windings or sections. This difference in voltage and current may imply that the individual windings or sections of the stator are not producing the same power, where the power production is thereby concentrated on the windings or sections producing the highest voltage which are thereby forced to yield the largest current. Hence, the efficiency of the generator may be considerably reduced simultaneously with local power dissipation in windings or sections of a rotor which may be disadvantageous since the monitoring of the temperature of a generator may not detect local overheating.

The paper entitled "Modular PM Generator/Converter Topologies, Suitable for Utility Interface of Wind/Micro Turbine and Flywheel Type Electromechanical Energy Conversion Systems" by E. Cengelci and P. Enjeti discloses fusti.

The purpose of the invention is to provide an electric circuit and a method for operating windmills where the electric efficiency is increased. Another purpose is simultaneously to attain greater reliability of the electric circuit of the windmill.

This may be achieved with an electric circuit for a windmill according to claim 1.

The power plant may be driven by e.g. water turbines, but in the following, for the sake of simplification, it is assumed that the case is windmills.

By the invention, it is achieved that there are formed a number of independent, self-contained electric circuits that transfer a part of the wind energy, yielded in the form of electric power from the generator, forward to the point where the electric power is transformed into three-phase AC current, before mixing of the partial powers processed in the independent circuits. Hereby, the voltage differences that can occur in the various circuits of a generator are reduced and eliminated, as the succeeding inverter absorbs power from its own supply circuit, where the inverter by its modulation can optimally utilise the power yielded from the associated stator section, whereby a higher efficiency is attained. At the same time, great reliability is achieved, as failure of a single generator section only implies a small reduction of the yielded power, where this reduction of yielded power only has influence if a windmill operates with maximum power yield which, however, only occurs for very short periods at a time.

By the electric circuit of a windmill being transformed into independent partial circuits, the later may be cut out and the electric production of a windmill is reduced, whereby windmills designed according to the invention will be suited for adapting the current conditions in connection with a network where overload may occur periodically, as a reduction in yield of the windmill may be effected by cutting out one or more of the partial electric circuits.

The independent inverters may include means that are able to adapt current and voltage to the current and voltage of the supply network. Hereby may be achieved that the individual inverters independently will adapt the delivered power to the actual frequency and phase conditions on the supply network. Each single inverter may be designed for always delivering current and voltage in the same phase, and if current and phase are delivered synchronously with the frequency and phase conditions on the supply network, an optimal power transmission may occur. By the independent inverters operating entirely independent of each other, the inverters may achieve a partial and mutual compensation of the noise generated in the inverter by switching the semiconductor components on and off. By mixing the signals for independently operating inverters, a part of this noise will be suppressed, and the requirements for filtering the delivered three-phase power may possibly be reduced.

Advantageously, the circuit may be designed with at least a first control circuit, where the control circuit is connected to a number of detectors that determine the operating conditions of the power plant. Hereby may be achieved that the control circuit performs a regulation by controlling inverters from the actual wind conditions and maybe from the actual rotational speed of the shaft, whereby it becomes possible to perform a real power regulation. The control circuit may also include means for supervising possible failure conditions, and by extreme failure conditions, the control circuit may perform an emergency braking of the windmill.

The circuit may include at least a second control circuit providing the inverters with synchronising signals on the basis of measurements on the supply network. Hereby may be achieved that simple and cheap inverters may be used, as they are receiving a synchronising signal delivered from the central circuit. Individual inverters may be designed in a way so that they are automatically synchronised with the received synchronisation signal. The second control circuit may include a regulation system which is capable of performing adaptation of the phase angle between current and voltage by acting on the synchronising signal based on measurements of the actual conditions on the supply network.

The set task may also be accomplished with a method for converting wind energy into electric power according to claim 4.

As mentioned above, a higher power yield and thereby greater reliability of a windmill may be attained thereby.

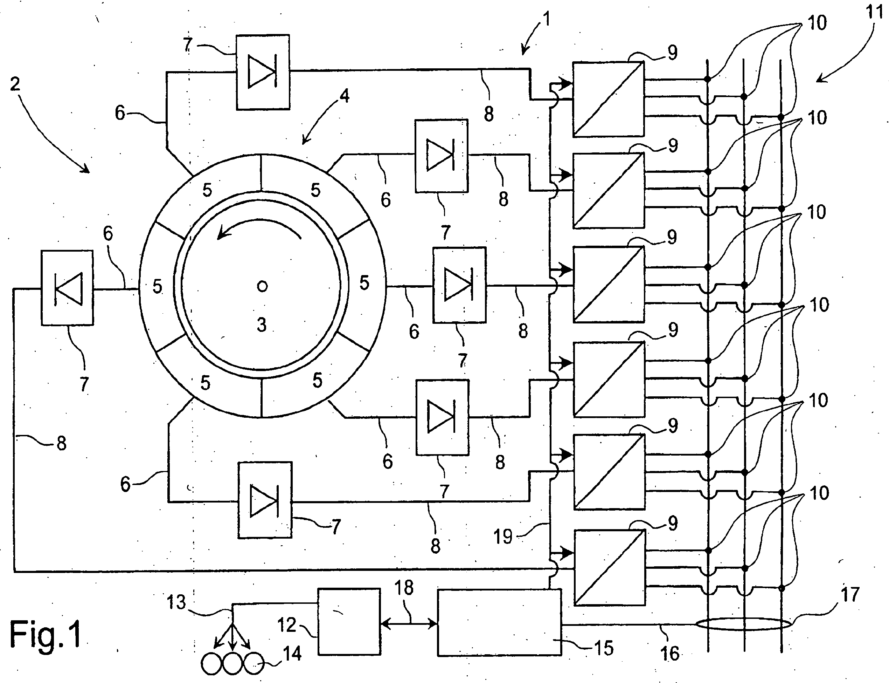

In the following, the invention is explained with reference to the single Figure of the drawing, which shows a possible embodiment of an electric circuit for a windmill. The circuit 1 includes a generator 2 having a rotor 3 which is surrounded by a stator 4. The stator 4 has independent sections 5. Each of these sections 5 includes independent generator outputs 6 which independently of each other are connected to a rectifier circuit 7. The rectifier circuits are connected to independent DC currents paths 8. The independent DC current paths 8 form connection to independent inverters 9, where the output terminals 10 of the inverters 9 are connected to a supply network 11.

A first control circuit 12 has connection 13 to a number of detectors 14 that monitor technical functions in and around the windmill, including e.g. measurement of wind speed, measurement of rotor speed, inclination of windmill wings relative to the wind and monitoring diverse temperatures in generator, gearbox etc., respectively. A second control circuit 15 has connection 16 to a detector 17 measuring frequency and phase on the supply network 11. The two control circuits 12, 15 are mutually connected with an electric coupling 18, where the circuit 15 forms a synchronising signal that is supplied to individual inverters 9 via a signal wire 19.

As the current paths 6, 8, 10 are running completely independently of the power producing, separate stator sections 5, independent electric circuits appear that may transfer power in each single circuit independent of the conditions prevailing in the other current paths. This means that a possible failure in one single component in a current path does not influence what is occurring in the other current paths. A failure occurring in one current path thus cannot put the other current paths out of action, and a windmill may continue normal operation, and unless the windmill is operating with maximum load, it may continue operation with any significant loss of production at all. Service possibly needed on the windmill may thus be postponed until a suitable situation arises. Particularly in the case of offshore windmills, the increased reliability will be of very great significance.

Besides, the reliability of the windmill may be substantially improved as the current paths may be designed so that connection of reserve components may take place automatically. A windmill may possibly contain a backup inverter and a backup rectifier, whereas replacement of stator sections may possibly require manual intervention.

Another advantage of a circuit as described on the Figure is that possible differences in the voltage produced in individual generator sections 5 has very little effect, as no mixing of the produced power occurs before passage of an inverter 9, where the power yield of an inverter 9 may be adapted to the supplied DC. This means that it will be possible to absorb optimally produced power in each of the stator sections 5. The stator 4 will thereby achieve a uniform electric and thermal load, and the total power that may be absorbed by the circuit according to the invention will be considerably increased as compared with power absorbed in existing windmills.

## Claims

1. Electric circuit (1) for a windmill including a driven generator (2) with rotor (3) and stator (4), independent rectifier circuits (7), independent direct current circuits (8), and independent inverters (9),
where the electric outputs (6) of the generator are connected to the independent rectifier circuits (7),
where the independent rectifier circuits (7) are connected through the independent direct current circuits (8) to the independent inverters (9) which are connected to a supply network (11), wherein
- the stator (4) of the generator is divided into at least two separate sections (5) that each is connected to at least one of the independent rectifier circuits (7); and
- each of the independent rectifier circuits (7) is connected to at least one of the independent direct current circuits (8);
- where each of the independent direct current circuits (8) is connected to the input of at least one of the independent inverters (9); and
- where the outputs of each of the independent inverters (9) are connected to a supply network (11),
wherein each group of the associated independent rectifier circuit, independent direct current circuit and independent inverter forms a partial circuit,
wherein the independent inverters (9) include means that are able to adapt current and voltage to the current and voltage of the supply network (11),
said electric circuit being **characterized in that**
one ore more of the partial circuits is cut out effecting a reduction of a yield of the electric production of the windmill, whereby adapting the current conditions in connection with the supply network (11) where an overload occurs periodically.

2. Electric circuit according to claim 1, **characterised in that** the circuit (1) includes a first control circuit (12), where the control circuit (12) is connected to a number of detectors (14) that determine the operating conditions of the power plant.

3. Electric circuit according to one of claims 1 - 2, **characterised in that** the circuit (1) includes a second control circuit (15) which on the basis of measurements on the supply network (11) provides the inverters (9) with synchronising signals.

4. Method for converting wind energy into electric power, where a wind-driven rotor is coupled to at least one generator (4),
- where the output current of the generator is transformed into direct current;
- where the direct current is converted to alternating current by at least one inverter;
- where the inverter is connected to a supply network (11), wherein
- the generator (2) is producing at least two separate output currents;
- the output currents are rectified to at least two separate direct currents that are supplied to at least two separate inverters (9) which are coupled to the supply network; and
- the inverters (9) include means for phase synchronisation with the supply network (11),
wherein each group of the associated independent rectifier circuit, independent direct current circuit and independent inverter forms a partial circuit,
wherein the independent inverters (9) include means that are able to adapt current and voltage to the current and voltage of the supply network (11),
the method further comprising:
cutting out one ore more of the partial circuits for reducing the yield of the electric production of the windmill, whereby adapting the current conditions in connection with the supply network (11) where an overload occurs periodically.

## Patentansprüche

1. Elektrische Schaltung (1) für eine Windkraftanlage, welche einen angetriebenen Generator (2) mit einem Rotor (3) und einem Stator (4), unabhängige Gleichrichterschaltungen (7), unabhängige Gleichstromschaltungen (8) und unabhängige Wechselrichter (9) aufweist,
wobei die elektrischen Ausgänge (6) des Generators mit den unabhängigen Gleichrichterschaltungen (7) verbunden sind, wobei die unabhängigen Gleichrichterschaltungen (7) über die unabhängigen Gleichstromschaltungen (8) mit den unabhängigen Wechselrichtern (9) verbunden sind, welche mit einem Versorgungsnetz (11) verbunden sind, wobei
- der Stator (4) des Generators in wenigstens zwei getrennte Abschnitte (5) aufgeteilt ist, welche jeweils mit wenigstens einer der unabhängigen Gleichrichterschaltungen (7) verbunden sind; und
- jede der unabhängigen Gleichrichterschaltungen (7) mit wenigstens einer der unabhängigen Gleichstromschaltungen (8) verbunden ist;
- wobei jede der unabhängigen Gleichstromschaltungen (8) mit dem Eingang wenigstens eines der unabhängigen Wechselrichter (9) verbunden ist; und
- wobei die Ausgänge jedes der unabhängigen Wechselrichter (9) mit einem Versorgungsnetz (11) verbunden sind,
wobei jede Gruppe aus der unabhängigen Gleichrichterschaltung, der unabhängigen Gleichstromschaltung und dem unabhängigen Wechselrichter, die einander zugeordnet sind, eine Teilschaltung bildet,
wobei die unabhängigen Wechselrichter (9) Mittel aufweisen, welche in der Lage sind, Strom und Spannung an den Strom und die Spannung des Versorgungsnetzes (11) anzupassen, wobei die elektrische Schaltung **dadurch gekennzeichnet ist, dass**
eine oder mehrere der Teilschaltungen abgeschaltet werden, was eine Verringerung einer Ausbeute der Stromerzeugung der Windkraftanlage bewirkt, wodurch die Strombedingungen in Verbindung mit dem Versorgungsnetz (11) angepasst werden, wo periodisch eine Überlast auftritt.

2. Elektrische Schaltung nach Anspruch 1, **dadurch gekennzeichnet, dass** die Schaltung (1) eine erste Steuerschaltung (12) aufweist, wobei die Steuerschaltung (12) mit einer Anzahl von Detektoren (14) verbunden ist, welche die Betriebsbedingungen der Kraftwerksanlage bestimmen.

3. Elektrische Schaltung nach einem der Ansprüche 1 bis 2, **dadurch gekennzeichnet, dass** die Schaltung (1) eine zweite Steuerschaltung (15) aufweist, welche auf der Basis von Messungen am Versorgungsnetz (11) den Wechselrichtern (9) Synchronisationssignale zuführt.

4. Verfahren zum Umwandeln von Windenergie in elektrische Energie, wobei ein windgetriebener Rotor mit wenigstens einem Generator (4) gekoppelt ist,
- wobei der Ausgangsstrom des Generators in Gleichstrom transformiert wird;
- wobei der Gleichstrom durch wenigstens einen Wechselrichter in Wechselstrom umgewandelt wird;
- wobei der Wechselrichter mit einem Versorgungsnetz (11) verbunden wird, wobei
- der Generator (2) wenigstens zwei getrennte Ausgangsströme erzeugt;
- die Ausgangsströme zu wenigstens zwei getrennten Gleichströmen gleichgerichtet werden, welche wenigstens zwei getrennten Wechselrichtern (9) zugeführt werden, welche mit dem Versorgungsnetz gekoppelt sind; und
- die Wechselrichter (9) Mittel zur Phasensynchronisation mit dem Versorgungsnetz (11) aufweisen,
wobei jede Gruppe aus der unabhängigen Gleichrichterschaltung, der unabhängigen Gleichstromschaltung und dem unabhängigen Wechselrichter, die einander zugeordnet sind, eine Teilschaltung bildet,
wobei die unabhängigen Wechselrichter (9) Mittel aufweisen, welche in der Lage sind, Strom und Spannung an den Strom und die Spannung des Versorgungsnetzes (11) anzupassen,
wobei das Verfahren ferner umfasst:
Abschalten einer oder mehrerer der Teilschaltungen zum Verringern der Ausbeute der Stromerzeugung der Windkraftanlage, wodurch die Strombedingungen in Verbindung mit dem Versorgungsnetz (11) angepasst werden, wo periodisch eine Überlast auftritt.

## Revendications

1. Un circuit électrique (1) destiné à une éolienne comprenant un générateur entraîné (2) avec un rotor (3) et un stator (4), des circuits redresseurs indépendants (7), des circuits de courant continu indépendants (8) et des inverseurs indépendants (9),
dans lequel les sorties électriques (6) du générateur sont raccordées aux circuits redresseurs indépendants (7),
dans lequel les circuits redresseurs indépendants (7) sont raccordés par l'intermédiaire des circuits de courant continu indépendants (8) aux inverseurs indépendants (9) qui sont raccordés à un réseau d'alimentation (11), dans lequel
- le stator (4) du générateur est divisé en au moins deux sections distinctes (5) qui sont chacune raccordées à au moins un des circuits redresseurs indépendants (7), et
- chacun des circuits redresseurs indépendants (7) est raccordé à au moins un des circuits de courant continu indépendants (8),
- dans lequel chacun des circuits de courant continu indépendants (8) est raccordé à l'entrée d'au moins un des inverseurs indépendants (9), et
- dans lequel les sorties de chacun des inverseurs indépendants (9) sont raccordées à un réseau d'alimentation (11),
dans lequel chaque groupe composé du circuit redresseur indépendant associé, du circuit de courant continu indépendant et de l'inverseur indépendant forme un circuit partiel,
dans lequel les inverseurs indépendants (9) comprennent un moyen qui est capable d'adapter un courant et une tension au courant et à la tension du réseau d'alimentation (11),
ledit circuit électrique étant **caractérisé en ce que**
un ou plusieurs des circuits partiels est découpé, ce qui provoque une réduction d'un rendement de la production électrique de l'éolienne, adaptant ainsi les conditions de courant en rapport avec le réseau d'alimentation (11) dans lequel une surcharge se produit périodiquement.

2. Le circuit électrique selon la revendication 1, **caractérisé en ce que** le circuit (1) comprend un premier circuit de commande (12), le circuit de commande (12) étant raccordé à un nombre de détecteurs (14) qui déterminent les conditions de fonctionnement de la centrale électrique.

3. Le circuit électrique selon l'une quelconque des revendications 1 à 2, **caractérisé en ce que** le circuit (1) comprend un deuxième circuit de commande (15) qui, sur la base de mesures effectuées sur le réseau d'alimentation (11), fournit aux inverseurs (9) des signaux de synchronisation.

4. Un procédé de conversion d'énergie éolienne en courant électrique, dans lequel un rotor entraîné par le vent est couplé à au moins un générateur (4),
- dans lequel le courant produit en sortie du générateur est transformé en courant continu,
- dans lequel le courant continu est converti en courant alternatif par au moins un inverseur,
- dans lequel l'inverseur est raccordé à un réseau d'alimentation (11), dans lequel
- le générateur (2) produit au moins deux courants en sortie distincts,
- les courants produits en sortie sont redressés vers au moins deux courants continus distincts qui sont fournis à au moins deux inverseurs distincts (9) qui sont couplés au réseau d'alimentation, et
- les inverseurs (9) comprennent un moyen de synchronisation de phase avec le réseau d'alimentation (11), dans lequel chaque groupe composé du circuit redresseur indépendant associé, du circuit de courant continu indépendant et de l'inverseur indépendant forme un circuit partiel,
dans lequel les inverseurs indépendants (9) comprennent un moyen qui est capable d'adapter un courant et une tension au courant et à la tension du réseau d'alimentation (11),
le procédé comprenant en outre :
la découpe d'un ou de plusieurs des circuits partiels de façon à réduire le rendement de la production électrique de l'éolienne, adaptant ainsi les conditions de courant en rapport avec le réseau d'alimentation (11) dans lequel une surcharge se produit périodiquement.
